# EUROPEAN PATENT APPLICATION

(11) **EP 3 188 402 A1**
(43) Date of publication of application: **05.07.2017**
(21) Application number: 15307150.1
(22) Date of filing: 28.12.2015
(51) Int. Cl.: H04L 9/08, H04L 29/06, H04L 29/12

(54) **METHOD TO ESTABLISH A PRIVATE AND CONFIDENTIAL CONNECTION**

(71) Applicant: GEMALTO SA, 92190 Meudon (FR)
(72) Inventor: RHELIMI, Alain, 13881 GEMENOS Cedex (FR)
(74) Representative: Scheer, Luc

(57) **Abstract**

The present invention relates to a method to establish a private and confidential connection between two endpoints (EPA and, EPB) in a network comprising a set of servers (PR) acting as proxy server or/and as push server, said servers (PR) being dispatched on multiple orbits around a core (CoreS) hosting itself a server, in the limit of privacy protection provided by an Internet Service Provider concerning translation of public IP address in private IP address.

## Description

### FIELD OF THE INVENTION

The present invention relates to a method allowing a peer to peer (P2P) connection for Voice over IP or data transfer which is untraceable and confidential in the limit of the privacy protection related to the Internet Service Provider.

The invention also pertains to an endpoint device able to implement the method of the invention while connected to a push server based network.

### BACKGROUND OF THE INVENTION

In usual telephony system any user may contact a third party by dialing its phone number or an identifier (URI) which appears unique. The said phone number may be shared by numerous other users.

This system has drawbacks. First one is that the phone number is a large number correlating several applications leading to weaken the privacy protection. Furthermore the destination user cannot revoke a user willing to contact him/her without revoking all users which may use the same phone number. Also, a user may reject an incoming call for an unknown third party but cannot prevent the third party to call him/her. At last, any observer having access to the back bones conveying the phone calls even using the VoIP may tape the data traffic in order to deduce who is calling who and when.

The above predicates and drawbacks related to a phone call are also valid for an endpoint willing to contact another endpoint for performing a P2P data transfer using a push server concept. The anonymous push server requirement is illustrated within the GSMA subscription management where a network operator may push a subscription to a given mobile phone and to ensure the privacy protection of the user by preventing the traceability of the mobile phone. The network operator has the duty to trace a user associated to his/her subscription but not the mobile phone.

The legacy voice communications use specific data connection ensuring an isochronous/plesiochronous access to the network in order to make intelligible a conversation, for example MIC30 on E1 to E4.

The Push protocol may be used to establish a connection between two IP nodes related to two users. When a node knows the IP address and the protocol of the counterpart node, a P2P communication using the shared protocol can start. The P2P protocol between the two IP nodes can be confidential but it will be traceable by an observer accessing the PUSH server, even if the two channels of communication to the PUSH server are protected by using an encrypting technology, for example TLS. The TLS protocol ensures the confidentiality, for an external observer of the exchange between the two IP nodes but does not prevent privacy protection breaches within the Push Server.

The server is the weak part of the system as it does not support the non-traceability property. The privacy by design is thus a challenge to address.

Further alternative and advantageous solutions would, accordingly, be desirable in the art.

### SUMMARY OF THE INVENTION

The present invention aims at providing private and confidential communication in a peer to peer context, the method supporting the privacy by design capability and the non-traceability during operations.

The present invention is defined, in its broadest sense, as a method to establish a private and confidential connection between two endpoints (EPA and EPB) in a network comprising a set of servers acting as proxy server or/and as push server, said servers being dispatched on multiple orbits around a core hosting itself a server, in the limit of privacy protection provided by an Internet Service Provider concerning translation of public IP address in private IP address, comprising the following initial steps of, for each endpoint having a public IP address:
- generating two randoms, named ephemeral Alias (i.e. A_{A} or A_{B}) and ephemeral key (R_{A} or R_{B}), to be used as initial channel data,
- transferring securely and confidentially said initial channel data to the other endpoint,
- registering onto a server acting as push server using its ephemeral alias (A_{A}, A_{B}) and its public IP address,
said method further comprising the steps of, when subsequent connection with a named recipient endpoint (EPB) is initiated by one of the both, named calling endpoint (EPA) :
- for the calling endpoint A:
   - posting into a server acting as proxy server a message comprising the recipient ephemeral alias (A_{B}) and an encrypted datagram including the public IP address of the calling endpoint (EPA) encrypted with an ephemeral session key (K_{AB}) made by merging the ephemeral keys (R_{A},R_{B}) of both endpoints (EPA,EPB), as a request to establish a connection with the other endpoint, named recipient endpoint (EPB),
- for the posted server, forwarding the recipient ephemeral alias and the datagram to another server closer to the core, the procedure being repeated from server to server up to the ultimate server in the core,
- for the core server, broadcasting the message to all servers on the whole network of servers,
- for the server acting as push server where the recipient endpoint is registered, forwarding the recipient ephemeral alias (A_{B}) and the encrypted datagram to the recipient endpoint corresponding to the recipient ephemeral alias,
- for the recipient endpoint (EPB), accepting the incoming call from the calling endpoint (EPA), retrieving the IP address of the calling endpoint (EPA) by decrypting the datagram using ephemeral session key (K_{AB}),
- for the recipient endpoint (EPB), connecting the calling endpoint (EPA) using the deduced IP address over an encrypted channel using the ephemeral session key (K_{AB}),
- for both endpoints, renewing their channel data (R_{A}, A_{A} and R_{B}, A_{B}) and exchange them over the encrypted channel for a subsequent connection.

With the invention, the access to the IP network is fully anonymous and non traceable as soon as privacy is provided by the internet service provider. Especially in the case of mobile communication, a simple data flat fee subscription without voice subscription is sufficient for supporting the invention. If it is however possible to know that the called endpoint received a message by cracking the proxy server pushing the datagram, it remains impossible to know the caller as the communication is not routable.

One of the main rules of the Privacy by Design is not to cure a Privacy infringement but to prevent it by canceling, by design, any means allowing it. The Push Server handles information appearing random from the IP endpoints making inefficient any correlation leading to illegal disclosure of information.

With the invention, servers acting as proxy server anytime and as push server when a content has to be pushed to an endpoint, have no information from conveyed messages about the initial proxy server used by the caller for posting the initial message.

The invention is thus based on the exchange of basic randoms associated with a PUSH technology or a push server. No information is useable for deducing the keys for an observer tapping the data flow between the servers.

With the invention, the push server performing the meeting between the endpoints has robustness against the Privacy Attack as strong as the Internet Service Provider one as only alias are known, said alias changing at each communication between the two concerned endpoints.

With the invention, a user who did not perform the initial channel data exchanges cannot register the share alias for contacting the counterpart. A user who did not perform the initial AT exchanges cannot deduce the shared session key. The invention thus insures a control, for each user, of the counterpart who may contact him/her. Besides, a user may revoke the means for another to join her without impacting the other users willing to contact him.

The shared alias as all channel data parameters for contacting the counterpart user is changing at each connection. This feature makes an observer unable to correlate two communications and to weak the privacy protection. In particular, the encryption session key protecting the peer communications is ephemeral as it changes at each communication and is not predictable. The invention supports by design the perfect forward secrecy property. Then, without the logging of the ephemeral session keys from an endpoint, the confidentiality of the exchange data is as strongest as the encryption algorithm used between both endpoints.

The invention can, additionally to the renewal of the session key for a subsequent connection, support the renewal of the encryption algorithm ensuring the incapacity for an attacker to crack the encryption by exploiting the weakness of a given encryption algorithm.

Also, the porting of a URI (Universal Resource Identifier) as a phone number from a network operator to another one in order to sustain a continuity of services is getting useless. The IMSI and MSISDN are no longer the means for identifying a user or a system or a device and placing a phone call or to initiate a data exchange. Alternative solutions protecting the privacy based on random IMSI are possible. HLR server for routing a phone call from a user to another user is getting useless because the routing is dynamically performed by the proxy server on which the dynamic IP of the endpoint is registered and thus acting as a push server for this endpoint.

With the invention, only the user's certificate verification ensuring the conditional access to mobile IP network is needed. This point is generally the object of a commercial contract. Thus a basic network subscription can be as simple as a set of parameters for easing the access to the network and a certificate. It can include the condition of access (time, data volume...) for checking terms of a commercial contract. The consolidation of the billing can be operated in a secure element in the endpoint device and periodically reported to the network operator.

The content push may contain additional encrypted data, for example support of instant messaging as SMS, then this support allows a global non-traceability even at the IP (Layer 3) level.

According to an advantageous feature, the broadcasting step comprises the steps of, for the server in the core, broadcasting the message to all servers on the first immediately farthest orbit, and, for any server having received the message, broadcasting the message to a set of servers on the first immediately farthest orbit in such a way that all servers of the targeted orbit will receive once the message, the procedure will be repeated for each orbit of servers up to the farthest orbit.

This broadcasting feature enables to reach all proxy servers in the network.

According to an advantageous embodiment, the message further comprising a direction tag as "UP" informing on the direction of the message to the core within a network of orbital and coaxial servers, the method comprises, for the server in the core, switching direction tag as "DOWN" informing on the direction of the message from the core to farthest servers.

This embodiment enables a simple processing of the messages within the proxy servers' network.

Advantageously, the method comprises, for all servers, the step of managing two queues according to the type of content push as tagged in the direction tag, UP or DOWN.

This feature enables simultaneous processing of multiple requests for communication from various endpoints.

Advantageously, each queue implements an algorithm allowing to deliver content push timely random.

With such a characteristic, the first content push injected in the queue is not necessarily the first content push out of the queue. The queue algorithm will select randomly a content push among all content pushes registered in the queue.

According to an advantageous implementation, the timely random delivery is such that the input and output of content pushes are not synchronous.

While desynchronizing the input and output from the proxy server, it renders even more difficult any attack aiming in determining the origin and recipient of a given communication initialization.

Advantageously, an additional jitter is added as a random delay for delivering the content push out of the queue.

Such an enhanced queue management prevents an external observer to correlate the data traffic between servers PR and deduce the routing of a given content push CP.

According to an advantageous feature, the step of transferring securely and confidentially said initial channel data to the other endpoint uses a secure channel on a local medium.

This feature obliges the two devices to be in the vicinity of each other to make the first exchange. It facilitates and ensures a great security for the initialization of the possibility to communicate via the invention.

Advantageously said local medium is of the BLE, NFC or WIFI kind.

Such local medium are widely spread and are convenient for fast and secure exchange of the initial channel data.

According to a particular feature, said secure channel uses a session key deduced from a basic ephemeral ECC/RSA key agreement.

Such a key agreement enables a secure channel to be established on local medium.

According to an advantageous embodiment, the method comprises a step of dispatching the recipient alias for a same endpoint to multiple servers.

Thus, while the set of proxy/push servers are collaborating for routing a message from a caller endpoint to a recipient endpoint, the calling and the recipient endpoints do not share a common alias. No correlation is possible by analyzing the registry of the push servers for deducing the IP addresses of the endpoints. The content push routing is untraceable logically and timely within the networks of servers/proxies.

Advantageously, the step of dispatching uses a hash table having the alias of the recipient as input and gets as output the URL of a server where the alias has to be registered.

The ability to spread the alias by the caller on different proxies further enables the caller and the recipient endpoints not to share the same push server in the case where both may accept incoming call. If needed hash table algorithm can be further iterated in order to register on different proxies in case of conflicts.

Thus, according to a specific feature, said method further comprises, after the broadcasting step, a step of verifying if the hash table gives the same proxy server for the calling endpoint and the recipient endpoint, and, if yes, it further comprises the step of cascading hash table algorithm until peripheral proxies for both endpoints are different.

This enables any one of two endpoints to call another without compromising the privacy and confidentiality.

According to a preferred embodiment, servers being arranged in orbits, communications between servers of successive orbits use Random Handback Authentication.

This feature applies the advantages of the RHA principle in terms of privacy to the successive communication through the whole infrastructure of proxies.

The present invention also relates to an endpoint device able to implement the steps of the method of one of the preceding claims when performed by an endpoint and comprising, for this purpose, at least:
- a random number generator to generate ephemeral alias and ephemeral keys,
- a local secure channel establishment module to establish a secure channel using a session key with another endpoint to transfer initial channel data,
- interface to connect over the network comprising a set of servers acting as server or/and as push server, servers of the farthest orbit around the core being used to register its ephemeral alias and its private IP address,
- a private connection module able to post into a server acting as push server a message comprising the recipient ephemeral alias and an encrypted datagram including the its IP address encrypted with an ephemeral session key made by merging its ephemeral key with the one from another endpoint to be called, said private connection module being further able to receive its own ephemeral alias with a datagram from another calling endpoint, to decrypt said datagram to retrieve an IP address of a calling endpoint, said private connection module being further able to connect another endpoint using a known IP address over an encrypted channel using the ephemeral session key and to transfer new channel data to the other endpoint on the encrypted channel.

Such an endpoint device able to implement the method of the invention will enable its user to communicate with chosen counterpart users in a private and confidential manner.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows schematically the push server environment used by the invention;
- Figure 2 shows schematically a local initial exchange of authentication tokens between two endpoints;
- Figure 3 shows schematically the exchanges for an endpoint EPA calling an endpoint EPB according to the method of the invention;
- Figure 4 shows schematically the establishment of a direct communication between two endpoints according to the invention;
- Figure 5 shows schematically the functioning of the invention within an environment having several levels of intermediate proxies;
- Figure 6 shows schematically the functioning of an advantageous feature of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

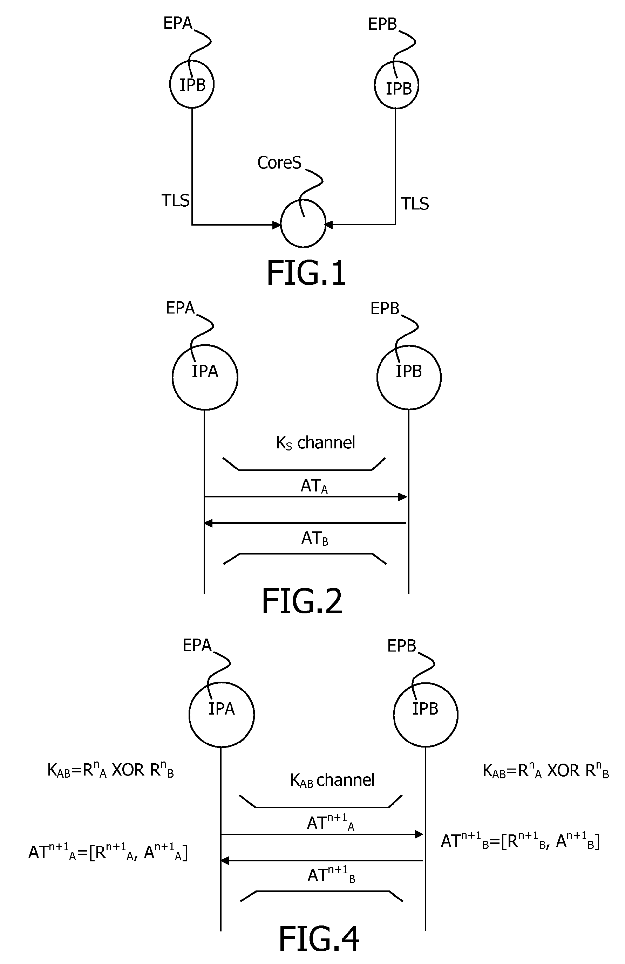

Figure 1 shows schematically a server environment used by the invention. Modern networks implementing technologies as IMS may offer uniform services layer over a generic mobile IP network. The same unification is already existing on internet and VoIP services based on PUSH (Session Initiation Protocol - SIP). It emulates the signaling of legacy phones and allows connecting in a P2P way to users and then offer a VoIP service (Voice over IP).

A central server CoreS is connected to several endpoints EPA, EPB through internet protocol and preferably a secure protocol, for example of the TLS kind (transaction layer security). The central server CoreS is able to broadcast received information on a network of servers. The two endpoints have an access by an internet service provider to the IP network.

The invention relies on push principle. However, on itself, this principle does not support non-traceability properties. This is the aim of the invention to provide non-tracability properties to such a communication infrastructure.

The invention is based on an initial exchange of two Authentication Tokens AT, being initial channel data, constituted of two random parameters: A being an ephemeral alias and R being an ephemeral key.

As illustrated on figure 2, each endpoint generates such initial channel data and performs an initial exchange of their respective authentication tokens by using a secure channel on a given media which could be local (e.g. BLE, NFC, WIFI...). The secure channel typically uses a local secure channel session key K_{S} ensuring the enciphering/deciphering of a message containing the initial channel data. The local secure channel session key may be for example deduced from a basic ephemeral ECC key agreement. Such an exchange is typically performed at the time where, today, two users exchange their phone numbers between two mobile devices having local secure channel establishment means.

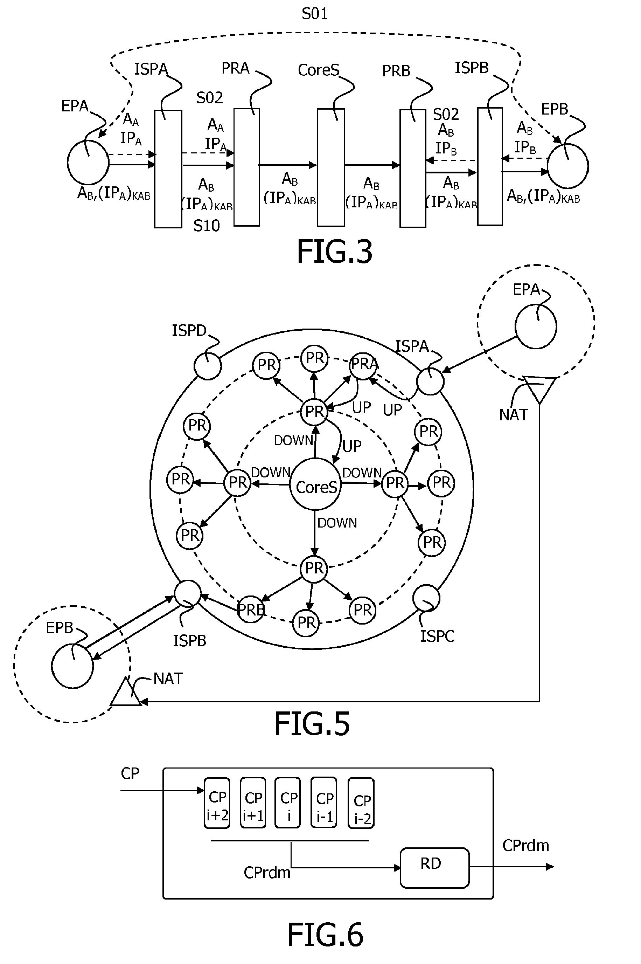

Figure 3 shows schematically the exchanges between two endpoints according to the invention for an endpoint EPA calling an endpoint EPB. Preliminary authentication tokens are generated at each endpoints. Those authentication tokens each comprise an ephemeral alias and an ephemeral key. Two steps S01 and S02 illustrated in dashed lines are then performed. Step S01 consists in, for the both endpoints, exchanging the generated authentication tokens as shown on figure 2 using a local secure channel. Step S02 consists, for each of the endpoints, in registering a part of the authentication token, the ephemeral alias A_{X}, at a respective server PRX through a respective internet service provider ISPX. The ephemeral alias A_{X} is registered with the public IP address IP_{X} of the endpoint X. It then enables the server PRX to push any content to the public IP address of the endpoint.

It is here noted that the ISPX advantageously perform a translation from a public IP address and a private IP address. The internet service provider thus defines a private IP address domain where public IP addresses are not used, e.g. NAT. The public address is the one used in the method of the invention to establish a direct connection between the two endpoints.

At the end of the preliminary steps, endpoint EPA has, to be able to be called or to call another endpoint B, four associated values: its own ephemeral alias A_{A} as generated and sent to the other endpoint B, its ephemeral key R_{A}, the ephemeral alias of the other endpoint A_{B} and its ephemeral key R_{B}. It has to be noted here that the description is done for only two endpoints and for a point to point communication. No double index is thus provided associated with each ephemeral value.

Strictly speaking, as many endpoints can potentially be called by endpoint A, each of the four values should be noted with two index. For example, in memory, endpoint EPA has quadruplets of the following kind to be able to call two other endpoints EPB and EPC: (A_{AB}, R_{AB}, A_{BA}, R_{BA}) (A_{AC}, R_{AC}, A_{CA}, R_{CA}).

Then, when the endpoint A, for example, wants to call endpoint B, it pushes in a step S10 towards the server CoreS a notification message comprising the stored ephemeral alias A_{B} of the endpoint EPB and a datagram including its public IP address (IP_{A})K_{AB} encrypted using an ephemeral session key K_{AB} formed using the two ephemeral keys R_{A} and R_{B}. Advantageously the notification message further comprises a direction tag stipulating that the message is of an UP kind meaning that message has to be transferred to the core server through successive orbits of servers as it is illustrated on figure 6.

Then the core server CoreS broadcasts the notification message on the internet within a network of servers. Advantageously broadcast message have a DOWN direction tag. While receiving the notification message, the push server PSB where EPB previously registered notices that the ephemeral alias A_{B} corresponds to an associated public IP address. It forwards the notification message to this public IP address through the internet service provider ISPB.

While receiving the notification message, the endpoint EPB determines the ephemeral alias A_{A} corresponding to its own ephemeral alias A_{B}. Then, using the two ephemeral keys associated to the two alias, it calculates the ephemeral session key and uses it to decrypt the public IP address of endpoint A.

The invention is based on the use of a network of intermediate proxy servers PR and of a broadcaster which provides a coaxial routing solution through the network of intermediate proxies between two endpoints.

In such an environment, the alias A_{X} of each endpoint is registered with its public IP address IP_{XP} as defined by the internet service provider ISPX in a push server PRX.

Then when endpoint EPA wants to call endpoint B, a notification message comprising the EPB alias A_{B} and a datagram is up transferred to core CoreS and down broadcasted to the push server registering the alias of EPB.

Figure 4 illustrates an embodiment where the Endpoint EPB then contacts the endpoint EPA directly without using the push server infrastructure while using the ephemeral session key to secure the established channel. The secure channel is used for communication, for example voice over IP one, and meanwhile an exchange of newly generated authentication tokens ATⁿ⁺¹_{A} ATⁿ⁺¹_{B} is performed. Those tokens are to be used for the next communication between the both endpoints.

The UP transfer and DOWN broadcast is illustrated on figure 5 showing an infrastructure having a plurality of orbits of intermediate proxies PR around a core server CoreS. The collection of servers performs a coaxial routing for the content sent by EPA to be pushed to the endpoint EPB. On this figure, straight arrows show the broadcasting of the notification message. Curved arrows in the infrastructure of proxies show the UP transfer of the notification message towards the server CoreS.

A content push, here the notification message, has thus two types advantageously differentiated using a direction tag: an up transfer where a content push flows to the core server CoreS by jumping randomly from proxy PR to another in an envelope of proxies PR closer to the core server CoreS and a down broadcast where the content push is homogeneously broadcasted from the core to all proxies PR from an envelope of proxies to other one encapsulating them.

The endpoint EPA thus sends a content push as a notification message typed "UP" to the core server CoreS then the core server CoreS broadcasts the notification message typed "DOWN" to the endpoint EPB.

The peripheral proxies PRX in interface with the endpoints EPX all contain a push server on which any endpoint EPX can register its recipient alias, A_{A} for the endpoint EPA and A_{B} for the endpoint EPB.

In order to not register multiple aliases related to a single endpoint on the same proxy server PR, the aliases are dispatched to multiple peripheral proxies PR. A Hash table using the alias of the recipient, A_{A} for the endpoint EPA and A_{B} for the endpoint EPB, can be used to predictably dispatch the registration of the aliases on the peripheral proxies PR.

So for a given recipient, EPA or EPB, the hash table has the alias, A_{A} or A_{B}, as input and the output is the URL of the proxy PRX on which the alias has to be registered. If the result of the Hash Table gives the same URL proxy for the caller and the recipient then several Hash Table algorithms are cascaded until the proxy URLs are different. Then the caller and the recipient do not share the same proxy server PR and both can be the caller and the recipient while preserving non traceability and privacy.

In a specific embodiment, all communications between proxy servers and the core servers CoreS use RHA tunnels. Each proxy server manages its secret RHA key K. The secret RHA key can be ephemeral (random) and renewed periodically and a new AT can be provisioned to the proxies of the adjacent envelops by using a tunnel based on the RHA principle supporting the Perfect Forward Secrecy property. By transitivity, all RHA tunnel between all proxies support the Perfect Forward Secrecy.

Advantageously all proxies manage two queues according to the type of content push, UP or DOWN. This is illustrated on figure 7. Each queue implements an algorithm allowing to deliver content push CP timely random. The first content push CPi-2 injected in the queue is not necessarily the first content CPrdm push out of the queue. The Queue algorithm will select randomly a content push CPrdm among all content pushes CPx registered in the queue. The input and output of content pushes CP are not synchronous and advantageously an additional jitter RD is added as a random delay for delivering the content push CPrdm out of the queue. This queue management prevents an external observer to correlate the data traffic between proxies PR and deduce the routing of a given content push CP through the proxies network. Such of "time" attack is the one what has weakened the TOR network.

Thus, according to the invention and as illustrated on figure 3, the endpoint EPA is willing to push a content push CP=A_{B}, (IP_{A})K_{AB} to endpoint EPB having the alias A_{B}. The endpoint EPA thus pushes to a peripheral proxy by using a basic TLS channel the content push CP.

The endpoint EPB has previously registered A_{B} to a proxy PRB of the level which is the most distant from the core server CoreS. The proxy PRB is deduced from the EPB alias A_{B} by using a hash table. Then the content push is routed to the core server CoreS from the entry proxy where the notification message has been posted. This entry proxy server can be the one PRA on which EPA is registered or another one PR from the most distant orbit to the core. Then, the content push is broadcasted from the server CoreS to the proxy PRB being on the most distant from the core orbit and where A_{B} is registered. The proxy where A_{B} matches with a registered alias then forwards the content push to the endpoint EPB.

Thus when the proxy PRB on which the alias A_{B} of the recipient endpoint EPB of the call has been registered receives the notification message, it forwards the notification message to the endpoint EPB by using a possible IP address translation of the internet service provider ISPB which requested the registration and then steps as previously described are performed within the private IP domain.

Once the private IP address IP_{A} of the caller endpoint EPA has been decrypted a direct communication is established between the two endpoints. The direct communication may pass through a network address translation feature NAT of the internet service provider ISP.

Both endpoints then establish a secure channel according to a given confidential and protected protocol by using the session key K_{AB} = R_{A} XOR R_{B}. Each endpoint then generates a new AT and transfers over this secure channel the new AT to the counterpart in order to initialize the next communication from new parameters. The IP connection is from now on ready for running a given protocol related to a media, for example VoIP.

When the both endpoints perform their direct connection, both nodes purge their alias registration, which thus remains volatile, in order to not clutter the corresponding PUSH servers PRA and PRB. A new registration is then done using the new alias.

Regarding the traceability and anonymity of the endpoints, there are two levels to consider: the application level (OSI Level 7) and the transport level (OSI Level 3)

Level 7 is traceable by each endpoint because it is the objective of the invention to allow an endpoint to connect another endpoint. Even more, the endpoints have to mutually know each other during the initial steps using local communication link.

As disclosed in figure 3 the Push server ecosystem supports endpoints EPA and EPB having respectively public IP_{A} address and IP_{B} address and a central core server CoreS. IP_{A} is managed by the Internet Service Provider ISPA and IP_{B} is managed by the Internet Service Provider ISPB. The ISPA may locally translate the public IP address IP_{A} in private IP address. The ISPB may translate the public IP address IPB in private IP address

It is the Privacy by Design duty of each ISP to hide the IP address of each endpoint in order to hide the identity of each endpoint. Only governmental entity can access it then the invention offers the full privacy except for governmental accesses when the endpoints are dully identified.

The role of the registration push servers is to isolate the public IP address of the endpoints by propagating the datagram from the endpoint EPA to the endpoint EPB and thus by linking both endpoints in using the alias A_{A} and A_{B} which are associated to both the endpoint EPA and the endpoint EPB.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to establish a private and confidential connection between two endpoints (EPA, EPB) in a network comprising a set of servers (PR) acting as proxy server or/and as push server, said servers (PR) being dispatched on multiple orbits around a core (CoreS) hosting itself a server, in the limit of privacy protection provided by an Internet Service Provider concerning translation of public IP address in private IP address, comprising the following initial steps of, for each endpoint (EPA or EPB) having a public IP address (IPA or IPA)):
- generating two randoms, named ephemeral Alias (A_{A} or A_{B}), and ephemeral key (R_{A} or R_{B}), to be used as initial channel data,
- transferring securely and confidentially said initial channel data (A_{A} or A_{B}) to the other endpoint (EPB or EPA),
- registering onto a server (PRA or PRB) acting as push server using its ephemeral alias (A_{A} or A_{B}) and its public IP address (IPA or IPB),
said method further comprising the steps of, when subsequent connection with a named recipient endpoint (EPB) is initiated by one of the both, named calling endpoint (EPA) :
- for the calling endpoint (EPA):
- posting into a server acting as proxy server a message comprising the recipient ephemeral alias (A_{B}) and an encrypted datagram ((IPA)_{KAB}) including the public IP address (IPA) of the calling endpoint (EPA) encrypted with an ephemeral session key (K_{AB}) made by merging the ephemeral keys (R_{A},R_{B}) of both endpoints (EPA,EPB), as a request to establish a connection with the other endpoint, named recipient endpoint (EPB),
- for the posted server, forwarding the recipient ephemeral alias (A_{B}) and the datagram ((IPA)_{KAB}) to another server closer to the core, the procedure being repeated from server to server up to the ultimate server in the core (CoreS),
- for the core server (CoreS), broadcasting (A_{B},(IPA)_{KAB}) the message to all servers on the whole network of servers (PR),
- for the server (PRB) acting as push server where the recipient endpoint (EPB) is registered, forwarding the recipient ephemeral alias (A_{B}) and the encrypted datagram ((IPA)_{KAB}) to the recipient endpoint (EPB) corresponding to the recipient ephemeral alias (A_{B}),
- for the recipient endpoint (EPB), accepting the incoming call from the calling endpoint (EPA), retrieving the IP address (IPA) of the calling endpoint (EPA) by decrypting the datagram ((IPA)_{KAB}) using ephemeral session key (K_{AB}),
- for the recipient endpoint (EPB), connecting the calling endpoint (EPA) using the deduced IP address (IPA) over an encrypted channel using the ephemeral session key (K_{AB}),
- for both endpoints, renewing their channel data (R_{A}, A_{A} and R_{B}, A_{B}) and exchange them over the encrypted channel for a subsequent connection.

2. Method according to claim 1, wherein broadcasting step comprises the steps of, for the server in the core (CoreS), broadcasting the message to all servers on the first immediately farthest orbit, and, for any server (PR) having received the message, broadcasting the message to a set of servers on the first immediately farthest orbit in such a way that all servers (PR) of the targeted orbit will receive once the message, the procedure will be repeated for each orbit of servers (PR) up to the farthest orbit.

3. Method according to one of claims 1 and 2, wherein the message further comprising a direction tag as "UP" informing on the direction of the message to the core (CoreS) within a network of orbital and coaxial servers (PR), the method comprises, for the server in the core (CoreS), switching direction tag as "DOWN" informing on the direction of the message from the core (CoreS) to farthest servers (PR).

4. Method according to claim 3, comprising, for all servers (PR), the step of managing two queues according to the type of content push (CP) as tagged in the direction tag, UP or DOWN.

5. Method according to claim 4, wherein each queue implements an algorithm allowing to deliver content push (CP) timely random.

6. Method according to claim 5, wherein the timely random delivery is such that the input and output of content pushes (CP) are not synchronous.

7. Method according to one of claims 5 and 6, wherein an additional jitter is added as a random delay for delivering the content push (CP) out of the queue.

8. Method according to one of preceding claims, wherein the step of transferring securely and confidentially said initial channel data (Aₓ,Rₓ) to the other endpoint uses a secure channel on a local medium.

9. Method according to claim 8, wherein said local medium is of the BLE, NFC or WIFI kind.

10. Method according to one of claims 8 or 9, wherein said secure channel uses a session key deduced from a basic ephemeral ECC/RSA key agreement.

11. Method according to one of preceding claims, comprising a step of dispatching the recipient alias (Aₓ) for a same endpoint to multiple servers.

12. Method according to claim 11, wherein the step of dispatching uses a hash table having the alias of the recipient endpoint (A_{X}) as input and gets as output an URL of a server (PR_{X}) where the alias (A_{X}) has to be registered.

13. Method according to one of claims 11 and 12, said method further comprising, after the broadcasting step, a step of verifying if the hash table gives a same server (PR) for the calling endpoint (EPA) and the recipient endpoint (EPB), and, if yes, it further comprises the step of cascading hash table algorithm until peripheral servers (PRA, PRB) for both endpoints (EPA, EPB) are different.

14. Method according to one of preceding claims, wherein, servers (PR) being arranged in orbits, communications between servers of successive orbits use Random Handback Authentication.

15. Endpoint device (EPX) able to implement the steps of the method of one of the preceding claims when performed by an endpoint (EPX) and comprising, for this purpose, at least:
- a random number generator to generate ephemeral alias (A_{X}) and ephemeral keys (Rx),
- a local secure channel establishment module to establish a secure channel using a session key (K_{XY}) with another endpoint (EPY) to transfer initial channel data,
- interface to connect over the network comprising a set of servers (PR) acting as server or/and as push server, servers of the farthest orbit around the core (CoreS) being used to register its ephemeral alias (A_{X}) and its private IP address (IPX),
- a private connection module able to post into a server (PR) acting as push server a message comprising the recipient ephemeral alias (A_{Y}) and an encrypted datagram ((IPX)_{KXY}) including the its IP address (IPA) encrypted with an ephemeral session key (K_{XY}) made by merging its ephemeral key with the one from another endpoint (EPY) to be called, said private connection module being further able to receive its own ephemeral alias (AX) with a datagram ((IPY)_{KXY}) from another calling endpoint (EPY), to decrypt said datagram to retrieve an IP address (IPY) of a calling endpoint (EPY), said private connection module being further able to connect another endpoint (EPY) using a known IP address (IPY) over an encrypted channel using the ephemeral session key (KXY) and to transfer new channel data (A_{Y}, R_{Y}) to the other endpoint (EPX) on the encrypted channel.
